# EUROPEAN PATENT APPLICATION

(11) **EP 4 838 619 A1**
(43) Date of publication of application: **11.11.2026**
(21) Application number: 25305665.9
(22) Date of filing: 09.05.2025
(51) Int. Cl.: H01M 10/42, H01M 10/48, H01M 10/625, A62C 3/07, B60L 50/64, B60L 3/00, H01M 10/63, H01M 50/204

(54) **SYSTEM FOR STOPPING FIRE PROPAGATION IN AN ON-BOARD TRACTION BATTERY PACK ON A VEHICLE, VEHICLE AND METHOD**

(71) Applicant: ALSTOM Transport SA, 93400 St-Ouen sur Seine (FR)
(72) Inventor: BOUNHOURE, Mathieu, 65000 Tarbes (FR); AUDEMAR, Christophe, 65310 Horgues (FR); VAN T VEER, Thibault, 65000 Tarbes (FR)
(74) Representative: Plasseraud IP

(57) **Abstract**

System (10) for stopping fire propagation in an on-board traction battery pack (4) of a vehicle (1), the vehicle (1) comprising:
- the on-board traction battery pack (4) having a battery module (5) comprising a plurality of battery cells (6), and
- a compressed air device (7),

the system (10) comprising:
- a tank (8) containing a liquid (9),
- a first duct (11) configured to fluidly connect the compressed air device (7) and the tank (8),
- a second duct (12) configured to fluidly connect the tank (8) and the battery module (5), the second duct (12) being in a closed position in nominal mode,
- a triggering system (13) configured to detect a thermal runaway in a battery cell (6) of the battery module (5),

the system (10) being configured to switch the second duct (12) from the closed position to an open position and to trigger the compressed air device (7) to drive the liquid (9) from the tank (8) to the battery module (5) through the second duct (12).

## Description

### Technical Field

This disclosure pertains to the field of an on-board traction battery pack on a vehicle, in particular on a rail vehicle. In particular, the disclosure relates to a system for stopping fire propagation in an on-board traction battery pack on a vehicle, a vehicle comprising such a system and a method for stopping fire propagation in an on-board traction battery pack on a vehicle implementing such a system.

### Background Art

Lithium-ion battery packs are extensively utilized across various applications due to their high energy density and efficiency. However, they are prone to thermal runaway, consisting of a rapid increase in temperature in a battery cell that can lead to fire propagation between cells. This presents significant safety concerns, particularly in environments where large battery packs are employed, such as transportation systems.

In particular, on-board traction battery packs are used in vehicles, such as rail vehicles, providing the necessary energy to move the vehicle for a short or long distance, for example for a few hundred meters or for dozens of kilometers. These battery packs, often of the lithium-ion type, are susceptible to thermal runaway in which a rapid increase in temperature can lead to fire propagation between cells. The mechanisms involved in thermal runaway include exothermic reactions within the battery cells, which can escalate into uncontrolled fire incidents if not properly managed. This poses significant safety risks.

Conventional approaches of preventing fire propagation in traction battery packs often rely on passive fire barriers between cells, such as insulating layers which may delay but not completely prevent fire spread. Additionally, such approaches may not offer a rapid response to thermal events, leaving battery packs vulnerable to uncontrolled fire incidents.

Besides, traditional fire suppression systems for lithium-ion battery packs often utilize CO2 cartridges. However, this method may not effectively prevent fire propagation between individual cells.

Other existing solutions, such as putting the battery pack in a pool, cannot be implemented on a vehicle.

There is therefore a need for a more efficient and reliable system to prevent fire propagation in an on-board traction battery pack on a vehicle.

### Summary

This disclosure improves the situation. It is proposed a system for stopping fire propagation in an on-board traction battery pack on a vehicle, for example a rail vehicle, the vehicle comprising:
- the on-board traction battery pack having a battery module comprising a plurality of battery cells, and
- a compressed air device,
the system comprising:
- a tank containing a liquid,
- a first duct configured to fluidly connect the compressed air device and the tank,
- a second duct configured to fluidly connect the tank and the battery module, the second duct being in a closed position in nominal mode,
- a triggering system configured to detect a thermal runaway in a battery cell of the battery module,
the system being configured to switch the second duct from the closed position to an open position and to trigger the compressed air device to drive the liquid from the tank to the battery module through the second duct.

The system may use the compressed air device, in particular a column of compressed air, already present on the vehicle, in particular on the rail vehicle, to stop a thermal runaway in a battery cell. This means that the system does not need to add such a compressed air device to the vehicle, as it is already present on the vehicle. The compressed air is only used for driving the liquid, the latter being the element that effectively stops fire propagation by drowning the battery module.

The system is effective and quick for stopping fire propagation as the liquid is sent to the battery module with a pressure provided by the compressed air.

The closed position of the second duct is a position where the liquid cannot flow from the tank to an inner volume of the battery module. On the contrary, the open position of the second duct is a position where the liquid can flow from the tank to an inner volume of the battery module.

The nominal mode is a normal operating mode.

By "stopping fire propagation", it is meant that the thermal runaway starting in a battery cell is stopped, whatever there is a fire, i.e. flames, or not yet.

The following features can be optionally implemented, separately or in combination one with the others:

The compressed air device may comprise a column of compressed air, compressed air circuit.

The system may comprise a battery management system (BMS). In an example, the system may comprise an electrovalve connected to the battery management system and configured to close the second duct in nominal mode. The triggering system may be configured to send a signal to the battery management system in case of a thermal runaway. The battery management system may be configured to send a signal to the electrovalve to open it upon detection of the thermal runaway. The battery management system may be the one of the on-board traction battery pack. The opening of the electrovalve opens the way for the compressed air present in the compressed air device to push the liquid from the tank to the battery module through the second duct. In such an example, the triggering system may be a temperature sensor ; a voltage sensor (that detects a sudden drop in the cell voltage when TR starts) ; or a gas analyzing sensor. The triggering system is connected to the BMS.

In other examples, the triggering system may comprise a thermal-sensitive element. In such a case, the triggering system may be also configured to switch, for example automatically, the second duct from the closed position to the open position in case the temperature of a battery cell reaches a predetermined threshold temperature. In such examples, the thermal-sensitive element may be an element closing the second duct so that when the temperature rises and reaches the threshold temperature, the thermal-sensitive element is destroyed, therefore opening the second duct and letting the liquid driven by the compressed air enter the battery module.

The liquid may be dionized water. In other examples, the liquid may be a dielectric liquid and not flammable, in particular chosen among the group of silicone oil, mineral oil, perfluorinated compounds, polyalphaolefin, dimethyl silicone fluid and their mixtures.

The tank may contain a volume of liquid sufficient to ensure complete immersion of the battery cells of the battery module, in particular a volume in a range 20I to 200I, preferably equal to 100I. This allows to ensure that the fire propagation is stopped because such a volume of liquid entering the battery module drowns the battery module.

The on-board traction battery pack may comprise a plurality of battery modules, wherein each battery module comprises a dedicated triggering system. In such an example, the system may comprise a single second duct configured to fluidly connect the tank and each battery module, wherein in case of thermal runaway in a battery cell of a battery module of the plurality of battery modules, the dedicated triggering system of the corresponding battery module is configured to detect the thermal runaway in order that the system switches the second duct from the closed position to an open position and triggers the compressed air device to drive the liquid from the tank to the corresponding battery module through the single second duct..

In other examples, the system may comprise a single triggering system so that the battery pack comprising a plurality of battery modules may be drowned by the liquid.

The or each triggering system may be placed in the battery module, preferably in an upper part thereof, or above the battery module, the triggering system being preferably integrated in the battery module. The triggering system may be configured to detect a battery cell's voltage dropping from about 3V (nominal) to close to 0V when a thermal runaway happens. The triggering system may be placed in the second duct or near the second duct.

In another aspect, in combination with all or part of the above, it is proposed a vehicle, preferably a rail vehicle, comprising :
- an on-board traction battery pack having a battery module comprising a plurality of battery cells, and
- a compressed air device,
- a system for stopping fire propagation in the on-board traction battery pack as described above.

The vehicle is therefore equipped with an efficient system for stopping fire propagation in the battery pack, preventing the vehicle from burning for example.

The vehicle comprises a cab and wheels.

When the vehicle is a rail vehicle, the cab is mounted on the rail wheels to move on rails. The rail wheels are traditionally equipped with bogies.

The vehicle, in particular the cab, may have a roof. The on-board traction battery pack is preferably placed on the roof.

The vehicle, in particular the cab, may have a floor. The compressed air device may be positioned under the floor, for example near the bogies. The compressed air device may be at a pressure comprised between 1 bar and 10 bar. The tank may be positioned under the floor.

In case the tank and the compressed air device are positioned under the floor, the first duct may be also at least partially under the floor. In case the tank and the compressed air device are positioned under the floor and the battery pack is placed on the roof, the second duct extends from under the floor to above the roof. The length of the second duct may be up to 30m long, preferably between 3m to 15m.

The battery module may have a bottom plate that is substantially watertight or has openings, especially condensation holes, that are above a level of liquid that is to be reached when a predetermined volume of liquid is spilled into the battery module in case of thermal runaway.

The vehicle may be a rail vehicle, a bus, a ship, a boat, or another type of vehicle.

In another aspect, in combination with all or part of the above, it is proposed a train comprising a vehicle being a rail vehicle as described above or a plurality of rail vehicles among which at least one is as described above. The train may be chosen in the group consisting of a train, a tram, a freight train, light rail vehicle, high-speed train, metro or subway train.

In another aspect, in combination with all or part of the above, it is proposed a method for stopping fire propagation in an on-board traction battery pack of a vehicle, for example a rail vehicle, implementing the system as described above, the method comprising:
- detecting a thermal runaway in a battery cell of a battery module,
- switching the second duct from the closed position to the open position,
- flooding the battery module with the liquid driven by compressed air device.

The vehicle may be as described above.

Detecting a thermal runaway may be implemented by the trigger system. Switching the second duct from the closed position to the open position may be implemented by the BMS and the electrovanne or by the trigger system if it comprises a thermal-sensitive element. Flooding the battery module may be implemented automatically once the second duct is switched from the closed position to the open position.

The method allows to stop fire propagation in the vehicle in case of a thermal runaway in a battery cell.

### Brief Description of Drawings

Other features, details and advantages will be shown in the following detailed description and on the figures, on which:
[Fig. 1] is a schematic cross-sectional view of an example of rail vehicle comprising a system for stopping fire propagation in an on-board traction battery pack on a rail vehicle according to an example.
[Fig. 2] is a schematic cross-sectional view of an example of a system for stopping fire propagation in an on-board traction battery pack on a rail vehicle.
[Fig. 3] is a schematic cross-sectional view of an example of a system for stopping fire propagation in an on-board traction battery pack on a rail vehicle.
[Fig. 4] is a schematic cross-sectional view of a battery module after implementing a method for stopping fire propagation in an on-board traction battery pack on a rail vehicle according to an example.

### Description of Embodiments

In the various figures, the same references designate identical or similar elements. For simplicity's sake, only the elements that are useful for understanding the described example are shown in the figures and are described in detail below.

In the following description, when referring to terms qualifying absolute position, such as the terms "front", "rear", "top", "bottom", "left", "right", etc., or relative ones, such as the terms "above", "below", "upper", "lower", etc., or to qualifiers of orientation, such as "horizontal", "vertical", etc., reference is made, unless otherwise specified, to the orientation of the figures or of a rail vehicle in its normal position of use.

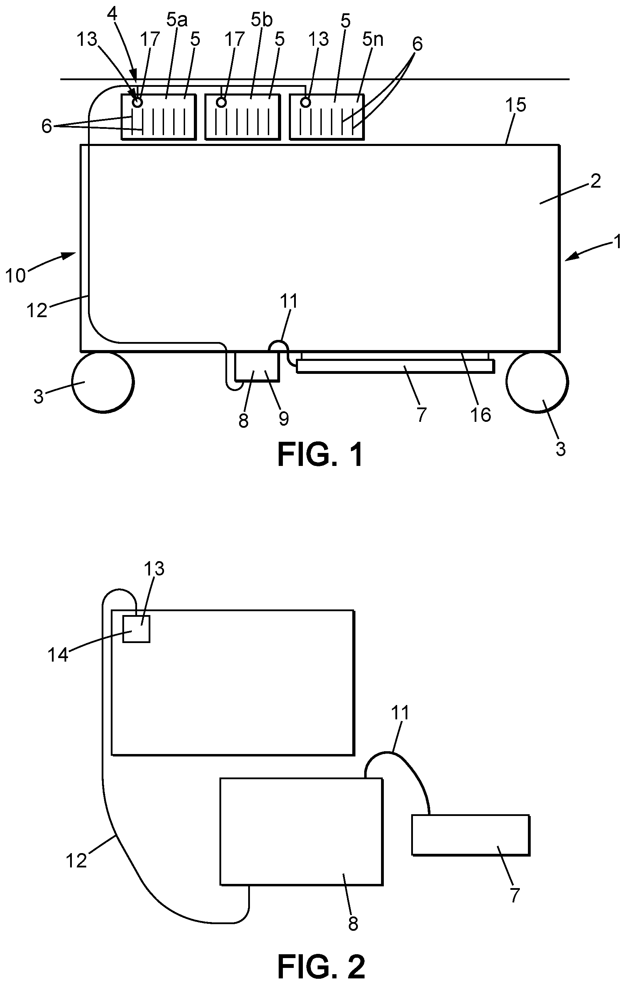

It is now referred to figure 1. Figure 1 shows a vehicle 1, which is a rail vehicle in this example, comprising a cab 2, wheels 3, which are rail wheels in this example, an on-board traction battery pack 4 having a battery module 5 comprising a plurality of battery cells 6. In this example, the battery pack 4 comprises a plurality of battery modules 5, designated in Figure 1 by 5a, 5b, 5n. The number of battery modules 5 is not limited and the layout of the battery modules 5 within the battery pack is not limited.

Furthermore, the battery pack 4 may be based on the lithium-ion technology such as NMC (Nickel Manganese Cobalt), LFP (Lithium Iron Phosphate), NCA (Nickel Cobalt Aluminum), LTO (Lithium Titanate Oxide), or any other cell chemistry prone to thermal runaway fire events, without departing from the scope of the disclosure.

The on-board traction battery pack 4 is used for providing the necessary energy to move the rail vehicle 1 for a short distance, for example for a few hundred meters, or for a long distance, for example for dozens of kilometers. This may allow the vehicle 1 to be autonomous on the move over a distance without catenary.

The vehicle 1 may be a vehicle or car of a train, such as a locomotive or a passenger rail vehicle, a tram, a freight train, light rail vehicle, high-speed train, metro or subway train. Several rail vehicles 1 may be part of a train.

Each battery module 5 comprises a plurality of battery cells 6.

The vehicle 1 also comprises a compressed air device 7. The compressed air device may be a column of compressed air or compressed air circuit. Such compressed air device 7 is used for operating pneumatic braking systems, which ensures safe and efficient stopping. It also powers air suspension systems (such as pantograph) by adjusting the height and damping of rail vehicle. Automatic doors rely on compressed air. Pantographs use compressed air to maintain electrical contact with overhead catenaries. The train's horn may be powered by compressed air. Additionally, compressed air may utilized for cleaning and maintenance tasks, cooling systems, and various auxiliary operations.

The compressed air system in a rail vehicle generally consists of a compressor that generates compressed air, air reservoirs for storage, a column of compressed air or compressed air circuit for distribution, regulators and valves for controlling flow and pressure, a distribution system for delivering air to various components, and safety and monitoring devices to ensure proper operation.

The vehicle 1 also comprises a system 10 for stopping fire propagation in the on-board traction battery pack 4 on the vehicle 1.

The system 10 comprises a tank 8 containing a liquid 9. The liquid 9 may be dionized water. The liquid 9 may have insulating and cooling properties that prevent short circuits and suppress fire propagation within the battery pack. The liquid 9 may be a dielectric liquid, notably chosen among the group of silicone oil, mineral oil, perfluorinated compounds, polyalphaolefin, dimethyl silicone fluid and their mixtures.

The system 10 comprises a first duct 11 configured to fluidly connect the compressed air device 7 and the tank 8. The system 10 also comprises a second duct 12 configured to fluidly connect the tank 8 and the battery module 5. The second duct 12 is in a closed position in nominal mode, as shown in Figure 1. The system 10 also comprises a triggering system 13 configured to detect a thermal runaway in a battery cell 6 of the battery module 5. The system 10 is configured to switch the second duct 12 from the closed position to an open position and to trigger the compressed air 7 to drive the liquid 9 from the tank 8 to the battery module 5 through the second duct 12.

Compressed air, or pressurized air, is only used as an actuator to push the liquid 9 from the tank 8 to the battery module 5 in case of a thermal runaway. It does not act for extinguishing a fire. It may be exterior air, i.e. ambient air, that is pressurized, compressed, by the compressor in the compressed air device 7. When compressed air is taken from the compressed air device, other air is compressed so that the pressure in the compressed air device remains substantially constant, i.e. in a range 7 bar to 10bar.

The tank 8 advantageously contains a volume of liquid, for example dionized water or dielectric liquid, sufficient to ensure complete immersion of the battery cells 6 of the battery module 5, in particular a volume in a range 20I to 200I. The compressed air is preferably at a pressure comprised between 7barand 10bar.

The cab 2 is mounted on the rail wheels 3 to move on rails. The rail wheels 3 are traditionally equipped with bogies. The cab 2 has a roof 15. The on-board traction battery pack 4 is placed on the roof 15, as shown. The cab 2 has a floor 16, and the compressed air device 7 is positioned under the floor 16, for example near the bogies. The tank 8 is also positioned under the floor 16, as shown.

The first duct 11 is also at least partially under the floor 16, as shown. The first duct 11 connects an opening made in an end of the compressed air device 7 to an opening made in an upper part of the tank 8, as shown, in this example.

The second duct 12 extends from under the floor 16 to above the roof 15, as shown. The length of the second duct 12 may be up to 30m long, preferably between 3m to 15m. The second duct 12 connects an opening made in a lower part of the tank 8, as shown, in this example, to an opening made in an upper part of the battery module 5, as shown, in this example, for example to an opening made in a cover of the battery module 5.

It is to be noted that the tank 8 is far from the battery module(s) 5, and is in particular not above the battery module(s). In general, the roof 15 of a vehicle 1 has many elements placed thereon and there is no space for the tank 8. This is why the liquid 9 has to be transported from another place of the train where the tank 8 is, in this example from under the floor 16. Compressed air 7 helps transporting the liquid 9 from the tank 8 distant from the battery module(s) 5 to the battery module(s) 5.

Figure 2 shows an example of a system 10 for stopping fire propagation in the on-board traction battery pack 4 on the vehicle 1. In this example, the triggering system 13 comprises a thermal-sensitive element 14. The triggering system 13 is configured to switch the second duct 12 from the closed position to the open position in case the temperature of a battery cell 6 reaches a predetermined threshold temperature. The triggering system 13 may in other examples comprise a voltage sensor that detects a sudden drop in the cell voltage when the thermal runaway starts or a gas analyzing sensor.

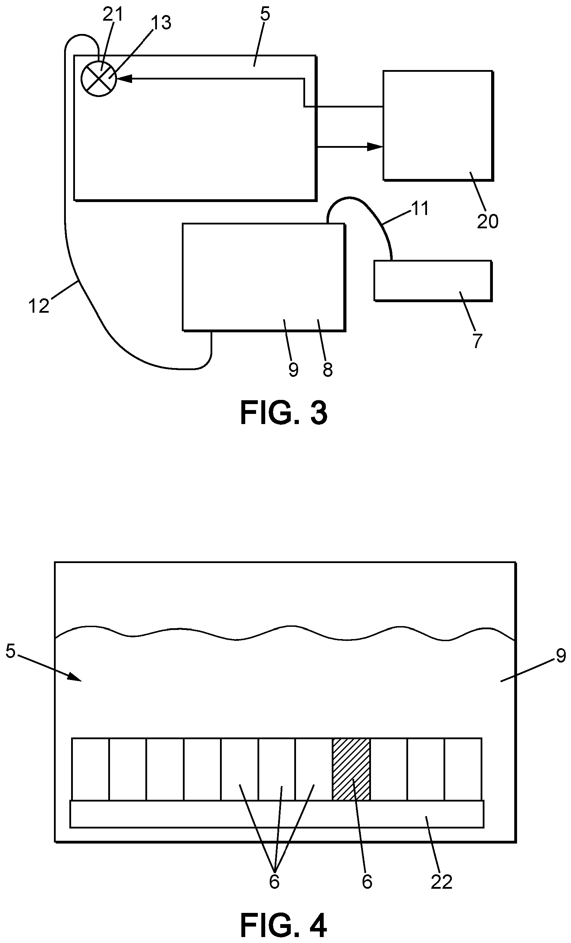

Figure 3 shows another example of a system 10 for stopping fire propagation in the on-board traction battery pack 4 on the vehicle 1. In this example, the system 10 comprises a battery management system (BMS) 20. The system 10 also comprises an electrovalve 21 connected to the battery management system 20 and configured to close the second duct 12 in nominal mode. The triggering system 13 is configured to send a signal to the battery management system 20 in case of a thermal runaway in a battery cell 6 of the battery module 5. The battery management system 20 is configured to send a signal to the electrovalve 21 to open it upon detection of the thermal runaway. This will then allow the liquid 9 to flow, driven by compressed air device 7, in order to enter the battery module 5 and extinguish the fire or stopping the thermal runaway, thereby stopping the fire propagation. Detection of a thermal runaway may be synonymous of detection that the temperature of a battery cell 6 reaches the predetermined threshold temperature or that the voltage in a battery cell 6 suddenly drops.

In the example of Figure 1, the on-board traction battery pack 4 comprises a plurality of battery modules 5, i. e. 5a, 5b..., 5n. The vehicle 1 may for example comprise eight or sixteen battery packs 4. The system 10 also comprises a plurality of triggering systems 13, with one triggering system 13 dedicated to one corresponding battery module 5 which means that each battery module 5 comprises a dedicated triggering system 13. The system 10 may comprise a single second duct 12 configured to fluidly connect the tank 8 and each battery module 5. In case of thermal runaway in a battery cell 6 of a battery module 5 of the plurality of battery modules, the dedicated triggering system 13 of the corresponding battery module 5 is configured to detect the thermal runaway in order that the system 10 switches the second duct 12 from the closed position to an open position and triggers the compressed air device 7 to drive the liquid from the tank 8 to the corresponding battery module 5 through the single second duct 12.

The single second duct 12 has bypasses 17, with each of the plurality of triggering systems 13 being in or near a bypass 17 of the second duct 12. The system 10 may be configured to switch only one bypass 17 from the closed position to the open position in case of thermal runaway detected in a battery cell 6 of the battery module 5 connected to this bypass 17 of the second duct 12. This allows to make the liquid 9 enter the battery module 5 that is concerned by the thermal runaway. There may be only one tank 8 and only one compressed air device 7 in the vehicle 1, for the battery pack 4.

The method for stopping fire propagation in an on-board traction battery pack 4 on the vehicle 1 implementing the system 10 comprises a first step of detecting a thermal runaway in a battery cell 6 of a battery module 5. The triggering system 13 is active in this step. Either it comprises a thermal sensitive element 14 as shown in Figure 2, or it comprises a thermal sensor providing a signal to the BMS 20 as shown in Figure 3. Then, the method comprises a second step of switching the second duct 12 from the closed position to the open position. This is made by the thermal sensitive element 14 that is broken and allows the flow of liquid to enter the battery module 5 in the example of Figure 2. This second step is implemented by an order of the BMS 20 to open the electrovalve 21 in the example of Figure 3. Then, a third step of the method, which is shown in Figure 4, takes place. It consists of flooding the battery module 5 with the liquid 9 driven by compressed air 7.

As shown in Figure 4, the battery module 5 has a bottom plate 22 that is substantially watertight. This prevents the liquid 9 from flowing on the roof 15 and/or into the cab 2.

In another example, the battery module 5 has openings that are above a level of liquid that is to be reached when a predetermined volume of liquid is spilled into the battery module 5 in case of thermal runaway. This prevents the liquid from leaking and falling on the roof 15 and/or into the cab 2 for example.

The battery module 5, or the battery pack 4, that is full of liquid 9 after implementing the method in case of a thermal runaway may be out of use. However, in such a case, the rail vehicle 1 may be saved, as the fire propagation has been stopped by the system 10.

A train may comprise one rail vehicle 1, or a plurality of rail vehicles 1, equipped with the system 10. For example, a lead rail vehicle and a trailing rail vehicle may be equipped with the system 10.

The present disclosure is not limited to a rail vehicle, but can concern a bus, a boat, a ship, or another type of vehicle.

## Claims

1. System (10) for stopping fire propagation in an on-board traction battery pack (4) of a vehicle (1), the vehicle (1) comprising:
- the on-board traction battery pack (4) having a battery module (5) comprising a plurality of battery cells (6), and
- a compressed air device (7),
the system (10) comprising:
- a tank (8) containing a liquid (9),
- a first duct (11) configured to fluidly connect the compressed air device (7) and the tank (8),
- a second duct (12) configured to fluidly connect the tank (8) and the battery module (5), the second duct (12) being in a closed position in nominal mode,
- a triggering system (13) configured to detect a thermal runaway in a battery cell (6) of the battery module (5),
the system (10) being configured to switch the second duct (12) from the closed position to an open position and to trigger the compressed air device (7) to drive the liquid (9) from the tank (8) to the battery module (5) through the second duct (12).

2. System (10) according to claim 1, wherein the system (10) comprises a battery management system (20) and an electrovalve (21) connected to the battery management system (20) and configured to close the second duct (12) in nominal mode, wherein the triggering system (13) is configured to send a signal to the battery management system (20) in case of a thermal runaway, the battery management system (20) being configured to send a signal to the electrovalve (21) to open it upon detection of the thermal runaway.

3. System (10) according to claim 1, wherein the triggering system (13) comprises a thermal-sensitive element (14) configured to switch the second duct (12) from the closed position to the open position in case the temperature of a battery cell (6) reaches a predetermined threshold temperature.

4. System (10) according to any of the preceding claims, wherein the liquid (9) is dionized water.

5. System (10) according to any of claims 1 to 3, wherein the liquid (9) is a dielectric liquid, in particular chosen among the group of silicone oil, mineral oil, perfluorinated compounds, polyalphaolefin, dimethyl silicone fluid and their mixtures.

6. System (10) according to any preceding claim, wherein the tank (8) contains a volume of liquid (9) sufficient to ensure complete immersion of the battery cells (6) of the battery module (5), in particular a volume in a range 20I to 200I, preferably equal to 100I.

7. System (10) according to any preceding claim, the on-board traction battery pack (4) comprising a plurality of battery modules (5; 5a, 5b, 5n), wherein each battery module (5; 5a, 5b, 5n) comprises a dedicated triggering system (13).

8. System (10) according to the preceding claim, wherein the system (10) comprises a single second duct (12) configured to fluidly connect the tank (8) and each battery module (5), wherein in case of thermal runaway in a battery cell (6) of a battery module (5; 5a, 5b, 5n) of the plurality of battery modules (5; 5a, 5b, 5n), the dedicated triggering system (13) of the corresponding battery module (5; 5a, 5b, 5n) is configured to detect the thermal runaway in order that the system (10) switches the second duct (12) from the closed position to an open position and triggers the compressed air device (7) to drive the liquid (9) from the tank (8) to the corresponding battery module (5; 5a, 5b, 5n) through the single second duct (12).

9. Vehicle (1) comprising :
- an on-board traction battery pack (4) having a battery module (5) comprising a plurality of battery cells (6), and
- a compressed air device (7),
- a system (10) for stopping fire propagation in the on-board traction battery pack (4) according to any of the preceding claims.

10. Vehicle (1) according to the preceding claim, comprising a roof (15), the on-board traction battery pack (4) being placed on the roof (15).

11. Vehicle (1) according to any of claim 9 and 10, comprising a floor (16), the compressed air device (7) being positioned under the floor (16), the compressed air device (7) being at a pressure comprised between 1 bar and 10 bar.

12. Vehicle (1) according to the preceding claim, wherein the tank (8) is positioned under the floor (16).

13. Vehicle (1) according to any of claims 9 to 12, wherein the battery module (5) has a bottom plate (22) that is substantially watertight or has openings that are above a level of liquid that is to be reached when a predetermined volume of liquid (9) is spilled into the battery module (5) in case of thermal runaway.

14. Method for stopping fire propagation in an on-board traction battery pack of a vehicle (1) implementing the system (10) according to any of claims 1 to 7, the method comprising:
- detecting a thermal runaway in a battery cell (6) of a battery module (5),
- switching the second duct (12) from the closed position to the open position,
- flooding the battery module (5) with the liquid (9) driven by compressed air device (7).
